# EUROPEAN PATENT APPLICATION

(11) **EP 4 851 810 A1**
(43) Date of publication of application: **09.12.2026**
(21) Application number: 25180890.3
(22) Date of filing: 04.06.2025
(51) Int. Cl.: G06F 11/34, G06F 11/07, G06F 9/48, G06F 16/2453

(54) **A METHOD OF AND APPARATUS FOR DETERMINING SYSTEM PERFORMANCE OF A DATABASE SYSTEM IN EXECUTING A QUERY**

(71) Applicant: Red Gate Software Ltd, Cambridge CB4 0XB (GB)
(72) Inventor: JACKSON, Adam John Robert, Cambridge (GB); HODGSON, Thomas Edwin, Durham (GB); OPPILAMANI, Saravanan, Southall (GB)
(74) Representative: Mathys & Squire

(57) **Abstract**

An aspect of the disclosure provides a computer implemented method of determining system performance of a database system in executing a candidate query, the method comprising: obtaining indication data, comprising an indication of estimated query time for the candidate query; accessing stored data defining an association between:(a) system performance data relating to characteristics of a plurality of prior queries and (b) a corresponding plurality of stored indications, each of said stored indications comprising the indication of estimated query time for a respective corresponding one of the prior queries, the method further comprising determining system performance of the database system in executing the candidate query based on the indication data and the stored data.

## Description

### Field

The present disclosure relates to methods and apparatus and more particularly to methods and apparatus for providing an indication of the internal status of a database system, such as a method and apparatus useful in determining the impact of running a query on a database in terms of the system performance such as usage and availability of hardware resources of that database.

### Background

Database performance is a delicate balance of design, hardware, and workload, and is therefore difficult to optimise. Poor performance in a database can lead to critical issues such as downtime, data loss, and security breaches.

Pinpointing the root causes of these problems, whether stemming from data distribution, schema flaws, or inefficient design, is a complex, manual process. This process demands the expertise of highly skilled professionals.

A common approach to testing database queries is the use of replica testing environments. These provide an indication of the impact of the query on the environment, without causing the impact on the original database. However, replica testing environments are complex to produce and maintain, particularly considering possible restrictions on the use of sensitive data stored in the database.

Hardware monitoring tools can also identify and resolve performance issues through updates or load adjustments. However, diagnosing data, schema, and query problems can be far more complex.

Code optimisation tools offer minor improvements, but fundamental design flaws still require expert intervention.

Web server load testing is common, however equivalent database load testing tools are lacking. Therefore, diagnosing performance issues caused by the combined impact of hardware, load, data distribution, schema, and queries remains a difficult, and largely manual process. This process requires highly skilled experts to manually analyse query plans and redesign databases, and requires complex tools and extensive time. Additional complexity is also introduced by the need to avoid making direct changes to the production database during testing.

### Summary

Aspects and examples of the present disclosure are set out in the claims and aim to address at least a part of the above-described technical problem, and other problems.

In an aspect there is provided a computer implemented method of determining system performance of a database system in executing a candidate query, the method comprising:
obtaining indication data, comprising an indication of estimated query time for the candidate query;
accessing stored data defining an association between:
   (a) system performance data relating to characteristics of a plurality of prior queries and
   (b) a corresponding plurality of stored indications, each of said stored indications comprising the indication of estimated query time for a respective corresponding one of the prior queries,
the method further comprising determining system performance of the database system in executing the candidate query based on the indication data and the stored data.

The system performance data may comprise the monitored query time for the prior queries - e.g. the query time measured when the query was executed. The system performance may also comprise data relating to other characteristics of the prior queries, such as CPU usage.

The indication of estimated query time may comprise at least one of
(a) an estimate of the query time, for example the query response time as measured on a controlled/isolated environment, for example a model based prediction of the query time, such as a machine learning, ML, model prediction;
(b) an estimate of query complexity;
(c) a data structure representing the query, for example a vector obtained by applying embedding layers from a machine learning model trained to predict impact metrics e.g

i) feature vectors used as inputs to a classical tree based ML model trained to predict query times;
ii) output of the pooling layers of a graph neural network trained to predict query times. .

Typically, the indication of estimated query time provides an estimate of how long a query will take to run on a database. The indication of estimated query time may also be provided by a metric of impact of a query on an arbitrary database. The arbitrary database may be a model database. This model database may be isolated, and system performance may be controlled. This impact metric, and the other indications of estimated query time, can be determined by any appropriate method. Any combination of monitoring of execution, statistics, rules, and/ or machine learning may be used.

The impact metric of a query may comprise an indication of:
- CPU consumption of the query, which may affect the performance of the database system
- Memory usage of the query, which may affect the performance of the database system, or cause periods of inactivity on the database server
- Locking objects referenced by the query, which may affect other queries on the database server that may have to wait for them to be released
- Inputs/outputs (IO) of the query, for example reading and writing to disk, which may be costly or block other queries
- Thread usage of the query, which may affect availability for other queries
- Deadlocks caused by the query, which may block resources permanently
   Query time, which may impact the duration of any of the effects described above

As one example, the indication of estimated query time, such as the impact metric, may be based on the query, the database schema, and information about the distribution of data in the database.

For example, an estimate of query complexity may be determined based on the computer readable command which defines the query. The method may comprise determining the query complexity by parsing the query command to determine a metric of complexity. As one example, the depth of the query tree could be used as an indication of the run time of a query.

In these and other examples a computer implemented model, such as a machine learning model, can be used to determine the indication of query time based on features of a query command and/or its execution, examples of such features include:
∘ how many key words are in the query,
∘ presence of a join statement,
∘ length of the query,
∘ count of key words,
∘ count of tables involved in the query.

One example of such a machine learning model is a neural network. A model as described may also be used to determine an impact metric of the query.

One example of a data structure representing the query is a graph data structure. In this approach, a graph data structure may encode the query, the database schema, and information about the distribution of data in the database. A machine learning element such as a Graph Attention Network may be used to update the node vectors and the relationships between nodes in this graph data structure. This updated graph structure can then be reduced to a fixed size vector, in a so-called "pooling". Such a vector can be provided to a regression head, which may output a scalar value indicative of query time.

As mentioned above, the fixed size vector obtained by pooling may be used as the indication of estimated query time, for example an impact metric.

No matter how the indication of estimated query time is obtained, the method may comprise identifying one of the stored indications of query time that matches the indication of estimated query time. This may comprise an exact match, or an approximate match - such as the best available match and/or a match based on interpolation from the stored data.

It will be appreciated in the context of the present disclosure that, where the indication of estimated query time is provided by an impact metric, the stored data comprises defining an association between:
(a) system performance data relating to characteristics of a plurality of prior queries and
(b) a corresponding plurality of stored indications, each of said stored indications comprising the impact metric for a respective corresponding one of the prior queries,

It will be appreciated in the context of the present disclosure that, where the indication of estimated query time is provided by an impact metric, the method may comprise identifying one of the stored impact metrics that matches the impact metric for the candidate query.

The method may comprise obtaining the candidate query from an interface of a development environment and providing, in the interface, an output based on the determined system performance of the candidate query. The output may include an indication of said determined system performance. The output may include an alternative query. These and other types of output may be provided in the form of a visual or aural prompt to an operator of the development environment. One example of a development environment is a so-called IDE.

The output may include an indication of performance of the alternative query. The indication of the performance of the alternative query may be determined based on a query time of the alternative query and the stored data.

The alternative query may be selected based on an indication of estimated query time of the alternative query. The alternative query may be selected based on both the indication of estimated query time of the alternative query and the stored data.

The alternative query may be generated by a machine learning element, such as an LLM.

An aspect of the present disclosure provides a method of controlling a database system, comprising:
obtaining monitoring data indicating the system performance of a query on a database system;
generating a replacement query for improvement of the query;
determining system performance of the replacement query, based on any one of the methods described or claimed herein;
determining whether to replace the query with the replacement query based on determined system performance of the replacement query.

The monitoring data may indicate query time and may relate to a plurality of queries and the method may comprise identifying based on the monitoring data a particular on of the plurality of queries which is to be improved.

Improving a query may comprise replacing the query. The method may further comprise providing an output indicating at least one of the queries to be replaced and the replacement query. These methods may further comprise replacing the query with the replacement query.

Embodiments of the disclosure provide computer program products and tangible non-transitory storage media carrying program instructions configured, when executed, to cause the computer to carry out any one or more of the methods described or claimed herein.

Embodiments of the disclosure provide computer apparatus and database systems configured to carry out any one or more of the methods described or claimed herein.

### Brief Description of Drawings

Embodiments of the disclosure will now be described in detail with reference to the accompanying drawings, in which:
Figure 1 shows a very schematic diagram of a computing apparatus configured to perform a method of the present disclosure;
Figure 2 shows a flow chart illustrating a method of the present disclosure;
Figure 3 shows a flow chart illustrates a method of the current disclosure;

In the drawings like reference numerals are used to indicate like elements.

### Specific Description

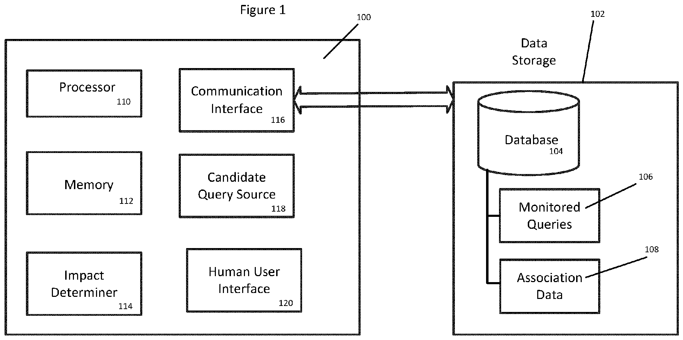

Figure 1 shows a computer apparatus 100 configured to perform determine the system performance of a database in executing a candidate query. This may be done by using an indication of the estimated query time of the candidate query, and stored data defining performance data of prior queries and an indication of the estimated query time of those prior queries. Figure 1 also shows a data storage 102 comprising a database 104, in communication with the computer apparatus.

The computer apparatus 100 comprises a processor 110, a memory 112, a communication interface 116, and a human user interface 120. The computer apparatus 100 is further configured to provide an impact determiner 114, and a candidate query source 118.

The human user interface 120 may provide communication between the computing apparatus 100 and a human user. The human user interface may be configured to obtain data comprising a user input. For example, this human user interface may comprise an IDE, an integrated development environment. The user input data may be obtained directly from text typed into the IDE. Typically, the obtained data is in the form of a computer readable instruction, such as an SQL query.

The candidate query source 118 may be configured to obtain data defining a database query, which may be obtained from the human user interface 120 or alternative data sources. This database query may be the candidate query for which the system performance of executing that candidate query is to be determined.

The impact determiner 114 may be configured to obtain a query from the candidate query source 118, and then obtain an indication of estimated query time of the candidate query. This indication may be obtained by operating a machine learning element for predicting query times as outlined in pending patent application EP25176522.8, or other appropriate methods. The indication of estimated query time may comprise an estimation of the time taken to execute the query on the database. The indication of estimated query time may also comprise an indication of the impact that running the query will have on an arbitrary database such as an impact metric for the query.

The communication interface 116 is arranged to provide communication between the computing apparatus 100 and the data storage 102 and database 104.

As illustrated, the database 104 is implemented on data storage 102 and comprises data defining the monitored queries 106, and the association data 108. The monitored queries 106 comprise queries that have previously been executed on the database. The association data 108 comprises data defining, for each of the monitored queries 106, an association between:
a) system performance data relating to the monitored query.
b) an indication of estimated query time for the monitored query. These indications may be obtained using impact determiner 114.

The association provides a mapping between these two features. For example, this mapping may be provided by a look-up table.

For example, the association data 108 may comprise an indication of estimated query times for the monitored queries 106. The association data may also comprise system performance data relating to characteristics of each of those monitored queries 106. For example, these may include actual run times, CPU usage, memory usage, throughput, wait statistics, batch requests, SQL compilations, pages splits, full scans, lock waits, lock timeouts, etc.

The data defining the monitored queries 106, and the association data 108 may be captured using a database monitoring tool, such as RedGate^{™} Monitor. Other appropriate monitoring tools may be used. This data may be predefined or updated.

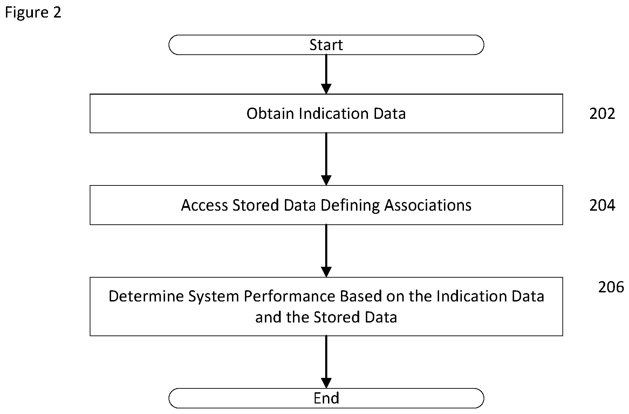

A method of operation of the apparatus described above will now be described with reference to Figure 2.

As illustrated, this method comprises the impact determiner 114 obtaining 202 indication data for the candidate query. The format of the indication data will match the indication data in the association data. The format of this data will be compatible with the association data - e.g. configured to facilitate comparisons and matching between the indication data for the candidate query and the data 108 which defines the stored association.

The processor then accesses 204 the association data 108 defining the association between the indication of estimated query times and system performance of monitored queries 106.

The processor then determines 206 system performance based on the indication data and the association data. For example, the processor is configured to search the association data 108 to find the monitored query 106 which is closest to the candidate query. The processor uses the indication data as a key to search through the association data to find a monitored query with an indication which matches the indication data for the candidate query. "Matches" may refer to an exact match, wherein the indication of estimated query time, complexity, embedding vector, impact metric etc for a monitored query exactly equals that of the candidate query. Matches may also refer to a closest match, wherein the indication of estimated query time for a monitored query has the closest indication available from the association data. The output of this search is one of the monitored queries 106, which we will be referred to as the closest query.

The processor 110 is further configured to infer the effect that running the candidate query will have on the system performance of a database.

In some implementations, an indication of the time taken for a query to run can be used to infer other effects of a query running on a database because two queries that have a similar indication of estimated run time are likely to have a similar fundamental complexity and therefore are likely to have similar effects on the system performance of the database. The more and more diverse the indication data the more this is true.

In other circumstances, the impact metric may be more appropriate to be used to infer other effects of a query running on a database. For example, consider two long running queries, query A and query B. Query A may be a very complex query, and may need to read a lot of data from disk to return a lot or rows, resulting in a high IO. This may impact the database server badly, slowing it down whilst query A runs. It may also be expensive on a cloud database. Query B may be a very simple query and may just need to wait for a high demand lock. This may have very little impact on the database server, as it will be able to process other queries fine. It may be cheap on a cloud database. Therefore, even though query A and query B have a similar estimated query time, they may have very different impacts on the database. Therefore, in some circumstances it may be more appropriate to compare queries with a similar impact metric.

In other words, two queries that have a similar impact metric are likely to have a similar fundamental complexity and therefore are likely to have similar effects on the system performance of the database.

As the closest query has been chosen as the query in which the indication of estimated query time (e.g. impact metric) most closely matches the candidate query, the closest query and candidate query are likely to have similar effects on the system performance of the database.

The processor is configured to search through the association data 108 for the corresponding system performance data for the closest query, as previously determined by the processor. This system performance data may comprise the actual run time of the closest query, as well as other characteristics, such as CPU usage.

These inferred effects may comprise, for example high memory usage or high CPU usage. For example, if the closest query causes high memory usage and high CPU usage, the processor may determine that the candidate query will have similar effects on the memory and the CPU.

Another example of inferred data may be the impact of the time of day on executing the candidate query. For example, if it is known that the closest query takes longer to execute during daytime, when there is more load on the system, then it may be inferred that the runtime of the candidate query will also be longer during the day.

The use of more sophisticated monitoring tools allows for more information relating to system performance to be captured in the association data e.g., throughput, wait statistics, batch requests, SQL compilations. More details captured in the association data allow for more inferences to be made by the processor. Therefore, the more sophisticated the monitoring tool used, the more powerful the inferences can be.

Where the indication of estimated query time comprises the estimated time a query will take to run on a database, the processor may be configured to use this inferred data to improve the accuracy of the indication of estimated query time of the candidate query. Data comprising the actual run time and the indication of estimated run time of the monitored query, can be accessed by the processor 110 from the association data 108. The processor may be configured to calculate difference between the indication of estimated time and actual run time. This same difference can then be inferred on the candidate query. For example, if the actual run time for the closest query was 50% longer than the indication of estimated run time, it could be inferred that the actual time taken for the new query to run might also be 50% longer than the indication of estimated run time.

Additionally, the system performance of the candidate query (as determined by the processor), may be output to the user. For example, the processor may be configured to provide this data to the human user interface 120, to display the output to the user. The processor may further be configured to aggregate this data. For example, data indicating the system performance of multiple characteristics may be combined into one overall output such as "too slow", or "ok". Another possible output may be a traffic light category of red, yellow, or green. Other suitable outputs based on the determined system performance of the candidate query may be used. The human user interface 120 may be configured to receive the system performance data from the processor, and then display this to the user. This display may be in the form of a suggestion comment in an IDE, or a comment box, for example.

In one embodiment, an alternative query may also be displayed to the user. This alternative query may be, for example, generated by a Large Language Model, or LLM. This alternative query may be obtained from candidate query source 118.

Additionally, the method as described above in relation to Figure 2 may be used to determine the system performance of the alternative query, wherein the "candidate query" as referred to in method is the alternative query. The system performance of the alternative query may then be displayed to the user through the human user interface 120, and the user can decide whether or not to replace the candidate query with the alternative query.

Additionally, this alternative query may be selected based on the indication of estimated query time of the alternative query. The processor may be configured to obtain multiple alternative queries from the candidate query source 118. The impact determiner 114 may be used to determine an indication of estimated query time for the alternative queries. These indications may be compared, and the alternative query with the best indication of estimated query time may be selected. The "best" indication of estimated query time may be the fastest/ lowest indication.

This alternative query may also be selected based on the system performance of the alternative query. As described above, the processor may be configured to obtain multiple alternative queries from the candidate query source 118. The method described above, in relation to Figure 2 may be used to determine the system performance of the alternative query. The system performance of the alternative queries may be compared, and the alternative query may be selected based on the determined system performance.

In either of the above examples, the indication of estimated query time or determined system performance of the alternative query may also be presented to the user through the human user interface 120.

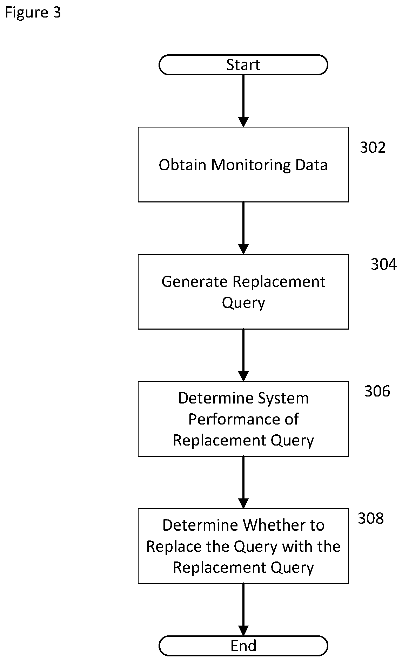

A method of using the method as outlined in Figure 2 to control a database system will now be described. In this method, the processor may obtain a monitored query and generate a possible replacement query. The method as outlined in Figure 2 can be used to determine the system performance of the possible replacement query. The processor can then compare this system performance to that of the monitored query and determine whether to replace the monitored query with the replacement query. This method will be described with reference to Figure 3.

As illustrated, this method comprises the processor obtaining 302 monitoring data. This monitoring data may comprise an indication of the system performance of a monitored query 106 on the database 104. The monitoring data may also comprise the actual time taken to execute a query on the database 104. The processor is configured to access the monitored queries 106 and association data 108 from database 104 - e.g. via the communication interface 116. The association data comprises the monitoring data. Therefore, the processor obtains the monitoring data from the association data 108.

The processor then generates 302 a replacement query for the monitored query corresponding to the monitored data obtained in 302. This may be generated using a machine learning element, such as a Large Language Model, LLM.

The processor then determines 304 the system performance of the replacement query. This may be based on the method described above, in relation to Figure 2, steps 202 - 206, wherein the "candidate query" is the replacement query.

The processor then determines 306 whether to replace the query with the replacement query. The processor is configured to access the system performance of the monitored query from the association data 108 via the communication interface 116. The processor is also configured to compare the system performance of the replacement query, as determined in 304, with the stored system performance of the monitored query. Then, based on this comparison, the processor determines whether to replace the monitored query with the replacement query.

In the method described above, the replacement query may also be selected from a plurality of monitored queries 106. The candidate query source 118 may comprise a previously executed query on the database, as shown in Figure 1 as monitored queries 106. This may be useful as an indication of the system performance of monitored queries could target optimisation efforts toward monitored queries with a currently poor indication of system performance. The candidate query source 118 may be configured to select the replacement query based on the monitoring data. For example, the replacement query may be selected as the monitored query with the longest executed query time. For example, the replacement query may be selected as the current query with the highest CPU usage.

### Other embodiments

Alternatively, the impact determiner 114 may use a manual method to obtain an indication of the estimated query time on a database. For example, a simple estimation of query time may be manually calculated by parsing the query. For example, the depth of the query tree may be used as an indication of the estimated query time.

Alternatively, the impact determiner 114 may use a classical machine learning model to obtain an indication of the estimated query time on a database. In this model, a neural network may be hand designed to consider the features of a query that may affect how long it takes to run. This may include:
∘ how many key words are in the query,
∘ presence of a join statement,
∘ length of the query,
∘ count of key words,
∘ count of tables involved in the query.

The accuracy of this model will heavily depend on the features chosen as part of the model.

It will be appreciated from the discussion above that the embodiments shown in the Figures are merely exemplary, and include features which may be generalised, removed or replaced as described herein and as set out in the claims.

As mentioned above, the indication of estimated query time may be provided by any appropriate method, such as the method described in co-pending patent application EP25176522.8 the entirety of which is hereby incorporated by reference as if fully set forth herein.

It will therefore be appreciated that the indication of estimated query time on the database of the present disclosure may be obtained by a computer implemented method comprising: obtaining query data, defining a query which is to be executed on the database; obtaining schema data for the database; obtaining distribution data for the database, indicating a distribution of data content stored in the database; identifying parts of the schema data referred to in the query data; determining, based on the query data and the identified parts of the schema data, the corresponding parts of the distribution data, providing a graph data structure encoding the query data, the identified parts of the schema data, and the corresponding parts of the distribution data; and, operating a machine learning element on the graph data structure to obtain an indication of the estimated query time, such as an impact metric.

Generally, a graph data structure comprises data defining nodes and data defining edges, wherein the edges define relationships between the nodes.

Providing the graph data structure may comprise determining an abstract syntax tree, AST, representing the query.

For example, providing the graph data structure may comprise, for each column, table or literal of the query, providing corresponding column nodes, table nodes and literal nodes of the graph data structure.

For example, providing the graph data structure may also comprise, for each element of the query which is not a column, table or a literal, providing an AST node. The AST node may comprise data encoding the corresponding element of the query, such as data encoding an operator found in the query.

For example, providing the graph data structure may comprise at least one of:
a) providing column nodes of the graph data structure, wherein the column nodes comprise data corresponding to database columns referenced by the query;
b) providing literal nodes of the graph data structure corresponding to literal data values referenced by the query,
c) providing table nodes of the graph data structure, wherein the table nodes comprise data corresponding to database tables referenced by the query; and
d) providing AST nodes of the graph data structure, corresponding to elements of the query which are not columns, tables or literals, such as operators included in the query.

The method may comprise providing literal nodes of the graph data structure, wherein the literal nodes comprise data values corresponding to literal data values referenced by the query. The literal nodes may comprise an indication of a relationship between the literal data values referenced by the query and a distribution of corresponding data in the database - for example as defined in corresponding parts of the distribution data.

The method may comprise providing AST nodes of the graph data structure, wherein the AST nodes comprise data encoding elements of the query which are not columns, tables or literals, such as data encoding operators.

The column and/or table nodes of the graph data structure may be based on parts of the schema data selected based on the query. For example, the method may comprise providing elements of the feature vector of a table or column node of the graph data structure based on the schema data. For example, the method may comprise determining a data type of a column based on the schema data, and updating an element of the feature vector for that column to indicate said data type. In addition, or as an alternative, the method may comprise providing edges of the graph data structure based on the schema data. For example, the method may comprise adding an edge to the graph data structure based on the schema data. As another example, the method may comprise updating an existing edge based on the schema data. This may overlay the graph data structure for the query with further information defining the relevant parts of the database schema.

The method may comprise providing edges of the graph data structure based on the query and/or based on the schema data, for example the edges may be based on parts of the schema data selected based on the query. For example, the edges may indicate relationships between nodes of the graph data structure corresponding to relationships defined in the database schema.

The edges of the graph data structure may comprise column-column and/ or table-column edges. The database's indexes may be identified based on the schema data and the edges may encode this information. It has been found that encoding this information in the graph data structure improves query time estimation. Providing the graph data structure may comprise populating the literal nodes with data based on the corresponding parts of the distribution data.

The literal nodes may be populated with data indicating a corresponding literal data value of the query. This may comprise a first element indicating a relative position in a distribution, such as a percentile. This may comprise a second element indicating a size of a population, to which the literal data value belongs in the distribution, such as a count of a histogram bin.

In a typical query, AST nodes may be present.

Column and table nodes generally also are present.

Literal nodes may be present if there is a literal value in the query.

The machine learning element generally comprises an input stage adapted for operating on graph data structures. The input stage may comprise a neural network, such as a GNN, for example a graph attention network, GAT. The input stage may comprise a series of said neural networks, such as a series of GNNs, for example series of GATs.

Other types of machine learning element, other than a neural network, may also be adapted operating on graph data structures. Such an ML element may be configured to extract features from a graph data structure and to operate on those extracted features with an ML classifier or regression learning approach, such as a decision tree. These embodiments may be configured to operate on input of arbitrary size, because as will be appreciated in the context of the present disclosure, graph data structures (and so each input to the ML) can be different in length/size. These embodiments may be configured to be permutation invariant (e.g. so that a different sequence of the same nodes does not erroneously lead to different output). One way to implement such an approach is to operate on a fixed size part of the graph data structure at a time and to aggregate the output using a permutation-invariant function. Other approaches may be used.

The input stage may be configured to provide output in the form of a fixed size vector output, e.g. a vector having a size which is independent of the user data provided to the input stage. The fixed size vector may be created by pooling. The indication of estimated query time, such as the impact metric, may be based on this fixed size vector.

The machine learning element may further comprise a second stage configured to determine estimated query time from the fixed size vector provided by the first stage.

The second stage comprises a regression stage, such as a regression head.

The machine learning element may be configured to estimate database query time in an arbitrary database, different from the particular database (upon which the machine learning element was trained).

The plurality of items of training data may correspond to a plurality of different particular databases.

The plurality of items of training data all correspond to the same particular database (e.g. one single database).

With reference to the drawings in general, it will be appreciated that schematic functional block diagrams are used to indicate functionality of systems and apparatus described herein. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

In some examples the functionality of the controller may be provided by a general purpose processor, which may be configured to perform a method according to any one of those described herein. In some examples the controller may comprise digital logic, such as field programmable gate arrays, FPGA, application specific integrated circuits, ASIC, a digital signal processor, DSP, or by any other appropriate hardware. In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein. The controller may comprise an analogue control circuit which provides at least a part of this control functionality. An embodiment provides an analogue control circuit configured to perform any one or more of the methods described herein.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer implemented method of determining system performance of a database system in executing a candidate query, the method comprising:
obtaining indication data, comprising an indication of estimated query time for the candidate query;
accessing stored data defining an association between:
(a) system performance data relating to characteristics of a plurality of prior queries and
(b) a corresponding plurality of stored indications, each of said stored indications comprising the indication of estimated query time for a respective corresponding one of the prior queries,
the method further comprising determining system performance of the database system in executing the candidate query based on the indication data and the stored data.

2. The method of claim 1 wherein the indication of estimated query time is provided by an indication of how the candidate query will impact an arbitrary database system, for example an impact metric.

3. The method of claim 1 or 2 wherein the indication of estimated query time comprises at least one of:
(a) an estimate of the query time for example the query response time as measured on a controlled/isolated environment, for example a model based prediction of the query time, such as a machine learning, ML, model prediction;
(b) an estimate of query complexity;
(c) a data structure representing the query , for example a vector obtained by applying embedding layers from a machine learning model trained to predict impact metrics e.g
i) feature vectors used as inputs to a classical tree based ML model trained to predict query times;
ii) output of the pooling layers of a graph neural network trained to predict query times.

4. The method of any preceding claim comprising determining said system performance based on the system performance data of the prior query associated with a stored indication which matches the indication data for the candidate query.

5. The method of any preceding claim comprising obtaining the candidate query from an interface of a development environment and providing, in the interface, an output based on the determined system performance of the candidate query for example wherein the output includes an indication of said determined system performance.

6. The method of claim 4 or 5 wherein the output includes an alternative query.

7. The method of claim 6 wherein the output further comprises an indication of performance of the alternative query.

8. The method of claim 6 or 7 wherein the alternative query is selected based on an indication of estimated query time of the alternative query

9. The method of claim 6, 7 or 8 wherein the alternative query is selected based on both the indication of estimated query time of the alternative query and the stored data

10. The method of claim 6, 7, 8, or 9 in which the alternative query is generated by a machine learning element, such as an LLM

11. A method of controlling a database system, comprising:
obtaining monitoring data indicating at least one of query time and system performance of a query on a database system;
generating a replacement query for improvement of the query;
determining system performance of the replacement query, based on the method of any of claims 1 to 3; and
determining whether to replace the query with the replacement query based on determined system performance of the replacement query.

12. The method of claim 11 wherein the monitoring data relates to a plurality of queries and the method comprises identifying, from the plurality of queries, a particular query to be improved based on the monitoring data.

13. The method of claim 11 or 12 further comprising providing an output indicating at least one of the queries to be replaced and the replacement query.

14. The method of claim 11, 12 or 13 further comprising replacing the query with the replacement query.

15. A computer program product comprising program instructions configured to program a processor to perform the method of any preceding claim.

## Amended claims

### Amended claims in accordance with Rule 137(2) EPC.

1. A computer implemented method of determining system performance of a database system in executing a candidate query, the method comprising:
obtaining indication data, comprising an indication of estimated query time for the candidate query, wherein the indication of estimated query time is based on the query, the database schema, and information about the distribution of data in the database;
accessing stored data defining an association between:
(a) system performance data relating to characteristics of a plurality of prior queries, wherein each of the plurality of prior queries has previously been executed on the database system and
(b) a corresponding plurality of stored indications, each of said stored indications comprising said indication of estimated query time for a respective corresponding one of the prior queries,
the method further comprising determining system performance of the database system in executing the candidate query based on the indication data and the stored data.

2. The method of claim 1 wherein the indication of estimated query time being based on the query, comprises the indication being based on a graph data structure comprising the abstract syntax tree of the query overlaid with the database schema and information about the distribution of data in the database.

3. The method of claim 1 wherein the indication of estimated query time is at least one of:
(i) provided by an indication of how the candidate query will impact an arbitrary database system, for example an impact metric.
(ii) comprising at least one of:
(a) an estimate of the query time for example the query response time as measured on a controlled/isolated environment, for example a model based prediction of the query time, such as a machine learning, ML, model prediction;
(b) an estimate of query complexity;
(c) a data structure representing the query
, for example a vector obtained by applying embedding layers from a machine learning model trained to predict impact metrics e.g
i) feature vectors used as inputs to a classical tree based ML model trained to predict query times;
ii) output of the pooling layers of a graph neural network trained to predict query times.

4. The method of any preceding claim comprising determining said system performance based on the system performance data of the prior query associated with a stored indication which matches the indication data for the candidate query.

5. The method of any preceding claim comprising obtaining the candidate query from an interface of a development environment and providing, in the interface, an output based on the determined system performance of the candidate query for example wherein the output includes an indication of said determined system performance.

6. The method of claim 4 or 5 wherein the output includes an alternative query.

7. The method of claim 6 wherein the output further comprises an indication of performance of the alternative query.

8. The method of claim 6 or 7 wherein the alternative query is selected based on an indication of estimated query time of the alternative query

9. The method of claim 6, 7 or 8 wherein the alternative query is selected based on both the indication of estimated query time of the alternative query and the stored data.

10. The method of claim 6, 7, 8, or 9 in which the alternative query is generated by a machine learning element, such as an LLM.

11. A method of controlling a database system, comprising:
obtaining monitoring data indicating at least one of query time and system performance of a query on a database system;
generating a replacement query for improvement of the query;
determining system performance of the replacement query, based on the method of any of claims 1 to 3; and
determining whether to replace the query with the replacement query based on determined system performance of the replacement query.

12. The method of claim 11 wherein the monitoring data relates to a plurality of queries and the method comprises identifying, from the plurality of queries, a particular query to be improved based on the monitoring data.

13. The method of claim 11 or 12 further comprising providing an output indicating at least one of the queries to be replaced and the replacement query.

14. The method of claim 11, 12 or 13 further comprising replacing the query with the replacement query.

15. A computer program product comprising program instructions configured to program a processor to perform the method of any preceding claim.
